# EUROPEAN PATENT APPLICATION

(11) **EP 4 566 861 A1**
(43) Date of publication of application: **11.06.2025**
(21) Application number: 23849819.0
(22) Date of filing: 05.07.2023
(51) Int. Cl.: B60K 7/00, H02K 7/14, H02K 11/225

(54) **IN-WHEEL MOTOR**

(30) Priority: 02.08.2022 JP 2022123373
(71) Applicant: DENSO CORPORATION, Kariya-city, Aichi 448-8661 (JP)
(72) Inventor: ENOKIZONO, Kazuya, Kariya- city, Aichi 4488661 (JP); HORIHATA, Harumi, Kariya- city, Aichi 4488661 (JP); AKAMA, Sadahiro, Kariya- city, Aichi 4488661 (JP); KAWAI, Keisuke, Kariya- city, Aichi 4488661 (JP)
(74) Representative: TBK
(86) International application number: PCT/JP2023/024891
(87) International publication number: WO 2024/029260

(57) **Abstract**

An in-wheel motor (30, 300) includes: a tubular bracket part (70, 170, 370) fixed to a chassis part (20) of a mobile object; a stator (50, 350) connected to the bracket part; a rotor (40, 340) having a field pole and a shaft (31, 131, 331) and connected to a wheel (10), the shaft extending in a vehicle width direction; a bearing (60, 160, 360) rotatably supporting the shaft; and a rotation angle sensor (80, 380). The rotation angle sensor has: a rotor-side sensor part (81, 381) mounted to the shaft at a position radially facing an inner circumferential surface of the bracket part and extending radially outward; and a bracket-side sensor part (82, 382) configured to output a signal that depends on rotation angle of the rotor-side sensor part. A dimension from a radially outermost end of the rotor-side sensor part to the center of rotation of the rotor-side sensor part is smaller than a radius of the bearing.

## Description

### [CROSS-REFERENCE TO RELATED APPLICATIONS]

The present application is based on Japanese Patent Application No. 2022-123373 filed on August 2, 2022, the contents of which are incorporated by reference into the present application.

### [TECHNICAL FIELD]

The present disclosure relates to an in-wheel motor at least part of which is received in an inner space of a wheel; the wheel has a rim part to which a tire can be mounted and a disc part provided on a side of the rim part.

### [BACKGROUND ART]

There is known, for example as disclosed in Patent Document 1, an in-wheel motor in which a resolver is arranged radially outside a hub bearing that rotatably supports a shaft of a rotor; the resolver serves as a rotation angle sensor to detect the rotation angle of the rotor.

### [PRIOR ART LITERATURE]

### [PATENT LITERATURE]

[Patent Document 1]: Japanese Patent No. JP 4811074 B2

### [SUMMARY OF THE INVENTION]

In the case of employing the above arrangement, a rotation angle sensor having an outer diameter larger than that of the hub bearing is required. As a result, there is a concern that the outer diameter of the rotation angle sensor may become large.

It is, therefore, a primary object of the present disclosure to provide an in-wheel motor enabling reduction in the outer diameter of a rotation angle sensor.

According to the present disclosure, there is provided an in-wheel motor applicable to a mobile object. The mobile object includes a wheel having a rim part to which a tire can be mounted and a disc part provided on a side of the rim part. The in-wheel motor has at least part thereof received in an inner space of the wheel and is configured to rotate the wheel. The inner space is surrounded by the disc part and the rim part. The in-wheel motor includes: a tubular bracket part fixed to a chassis part of the mobile object and extending outward in a vehicle width direction from the chassis part side; a stator connected to the bracket part; a rotor having a field pole and a shaft and connected to the wheel, the shaft extending in the vehicle width direction; a bearing provided, in an axial direction of the shaft, on an outer side of the bracket part in the vehicle width direction to rotatably support the shaft; and a rotation angle sensor. Moreover, the shaft extends axially inward in the vehicle width direction to a position facing an inner circumferential surface of the bracket part in a radial direction of the shaft. The rotation angle sensor has: a rotor-side sensor part mounted to the shaft at the position facing the inner circumferential surface of the bracket part in the radial direction and extending outward in the radial direction; and a bracket-side sensor part mounted to the bracket part at a position facing the rotor-side sensor part and configured to output a signal that depends on rotation angle of the rotor-side sensor part. A dimension from a radially outermost end of the rotor-side sensor part to the center of rotation of the rotor-side sensor part is smaller than a radius of the bearing.

As above, according to the present disclosure, the bracket part is fixed to a chassis part of a mobile object and extends outward in the vehicle width direction from the chassis part side. Moreover, the bracket part is tubular in shape. Consequently, it becomes possible to have the shaft inserted from an opening of the bracket part on the outer side in the vehicle width direction into an inner space of the bracket part. Specifically, it becomes possible to have the shaft extending axially inward in the vehicle width direction to the position facing the inner circumferential surface of the bracket part in the radial direction of the shaft.

Moreover, according to the present disclosure, the rotor-side sensor part, which extends outward in the radial direction, is mounted to the shaft at the position offset inward in the vehicle width direction from the bearing and facing the inner circumferential surface of the bracket part in the radial direction. Since the rotor-side sensor part and the bracket-side sensor part, which together constitute the rotational angle sensor, are not arranged radially outside the bearing, it becomes possible to set the dimension from the radially outermost end of the rotor-side sensor part to the center of rotation of the rotor-side sensor part to be smaller than the radius of the bearing. As a result, it becomes possible to reduce the outer diameter of the rotation angle sensor.

### [BRIEF DESCRIPTION OF THE DRAWINGS]

The above-described object, other objects, features and beneficial advantages according to the present disclosure will become more apparent from the following detailed explanation with reference to the accompanying drawings. In the drawings:
FIG. 1 is a cross-sectional view of a wheel unit according to a first embodiment;
FIG. 2 is an enlarged view of both a hub bearing and a bracket part of the wheel unit shown in FIG. 1;
FIG. 3 is an enlarged view of both a hub bearing and a bracket part of a wheel unit according to a modification of the first embodiment;
FIG. 4 is an enlarged view of both a hub bearing and a bracket part of a wheel unit according to another modification of the first embodiment;
FIG. 5 is an enlarged view of both a hub bearing and a bracket part of a wheel unit according to a second embodiment;
FIG. 6 is an enlarged view of both a hub bearing and a bracket part of a wheel unit according to a third embodiment;
FIG. 7 is an enlarged view of both a hub bearing and a bracket part of a wheel unit according to a fourth embodiment; and
FIG. 8 is a cross-sectional view of a wheel unit according to a fifth embodiment.

### [EMBODIMENTS FOR CARRYING OUT THE INVENTION]

Embodiments will now be described with reference to the drawings. It should be noted that in the embodiments, functionally and/or structurally corresponding and/or associated parts will be designated by the same reference signs or by reference signs differing in the hundreds digit and higher as appropriate. Moreover, it also should be noted that for corresponding and/or associated parts in one embodiment, reference may be made to the explanation thereof in the other embodiments.

### [First Embodiment]

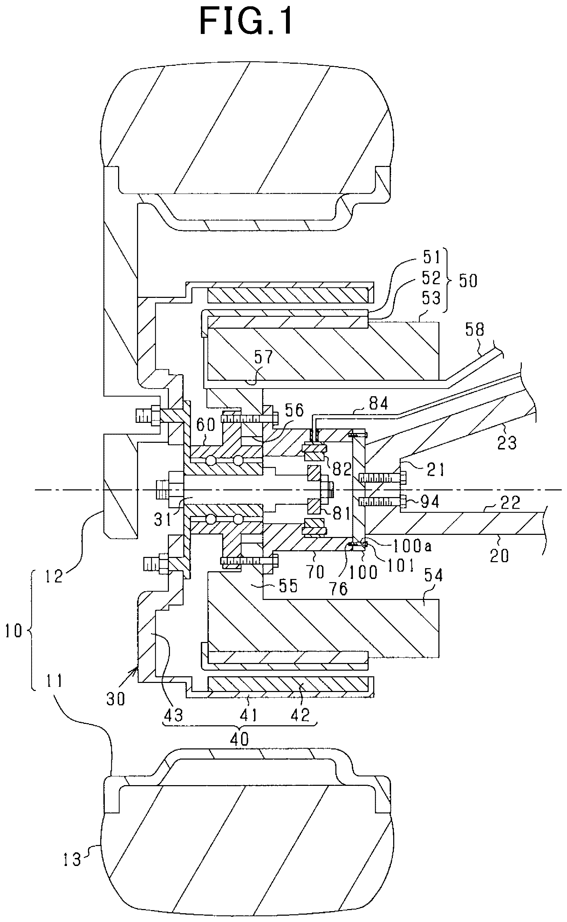

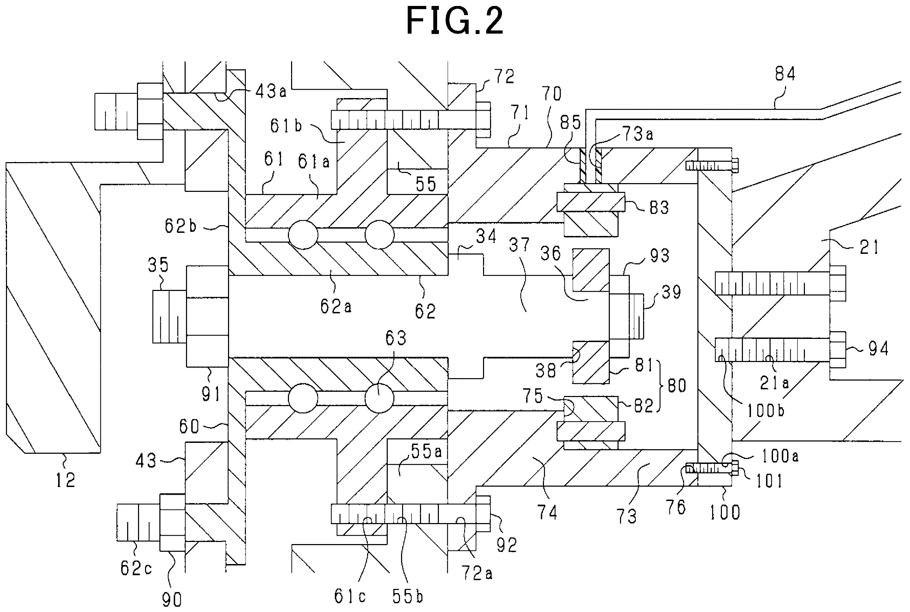

Hereinafter, a first embodiment embodying an in-wheel motor according to the present disclosure will be described with reference to FIGS. 1 and 2. The in-wheel motor constitutes, together with a wheel to which a tire is mounted, a wheel unit that serves as a driving wheel. The wheel unit according to the present embodiment is applicable to a vehicle such as an electric vehicle or a hybrid vehicle.

The wheel unit includes a wheel 10. The wheel 10 has a cylindrical rim part 11, and a disc part 12 provided at an outer end of the rim part 11 in a vehicle width direction. A tire 13 is mounted to an outer periphery of the wheel 10.

The wheel unit also includes an in-wheel motor 30 that rotates the wheel 10. The in-wheel motor 30 is mounted to a chassis part of the vehicle. More specifically, the in-wheel motor 30 is mounted to a knuckle 20 of a suspension device that constitutes the chassis part. The knuckle 20 has a mounting part 21 extending vertically, a lower arm 22 extending inward in the vehicle width direction from a lower end portion of the mounting part 21, and an upper arm 23 extending inward in the vehicle width direction from an upper end portion of the mounting part 21. The in-wheel motor 30 is mounted to the mounting part 21 of the knuckle 20. In addition, in the present embodiment, an example is given where the wheel unit is not a steered wheel; however, the wheel unit may alternatively be configured as a steered wheel.

At least part of the in-wheel motor 30 is received in an inner space of the wheel 10; the inner space is a space radially inside the rim part 11. The in-wheel motor 30 is configured to apply rotational power to the wheel 10. The in-wheel motor 30 is an outer rotor type motor which includes a shaft 31 extending in the vehicle width direction, a rotor 40, and a stator 50 that is arranged radially inside the rotor 40.

The rotor 40 includes a cylindrical magnet holder 41 and a magnet unit 42 provided on an inner circumferential surface of the magnet holder 41. The magnet holder 41 faces, over the entire range from its outer end to its inner end in the vehicle width direction, an inner circumferential surface of the rim part 11. The magnet unit 42 has a cylindrical shape coaxial with the central axis of rotation of the rotor 40, and has a plurality of magnets fixed to the inner circumferential surface of the magnet holder 41. In other words, the in-wheel motor 30 according to the present embodiment is configured as a Surface Permanent Magnet Synchronous Machine (SPMSM). In the magnet unit 42, the magnets are arranged so that their polarities are alternately different in a circumferential direction of the rotor 40. Consequently, the magnet unit 42 has a plurality of magnetic poles formed in the circumferential direction. The magnets may be implemented by, for example, polar anisotropic permanent magnets. More specifically, the magnets may be implemented by, for example, sintered neodymium magnets whose intrinsic coercive force is higher than or equal to 400[kA/m] and whose residual flux density Br is higher than or equal to 1.0[T]. It should be noted that the in-wheel motor 30 may alternatively be configured as an Interior Permanent Magnet Synchronous Machine (IPMSM).

An inner end portion of the magnet holder 41 in the vehicle width direction is bent inward in the radial direction of the rotor 40 to form a bent portion. The rotor 40 includes a discoid flat plate part 43 (corresponding to a "connection part") that is provided at an outer end of the magnet holder 41 in the vehicle width direction and connects the magnet holder 41 and the shaft 31. The disc part 12 is fixed to the flat plate part 43 by bolts and nuts. Consequently, the rotor 40 and the wheel 10 can rotate together with each other. In addition, both the magnet holder 41 and the flat plate part 43 may be formed of either a nonmagnetic material (e.g., aluminum or synthetic resin) or a magnetic material (e.g., iron).

The stator 50 has a cylindrical stator coil 51 located at a position radially facing the magnet unit 42, a cylindrical stator core 52 located radially inside the stator coil 51, and a base part 52 located radially inside the stator core 52. The stator core 52 is formed of a magnetic material (more particularly, a soft-magnetic material). For example, the stator core 52 may be formed of magnetic steel sheets.

The stator coil 51 is comprised of a plurality of phase windings, and formed into a cylindrical shape by arranging the phase windings in a predetermined order in the circumferential direction. More particularly, in the present embodiment, the stator coil 51 is configured as a three-phase coil which is comprised of U-phase, V-phase and W-phase windings. Each of the phase windings is formed by winding an electrical conductor multiply. Moreover, each of the phase windings has a pair of intermediate conductor portions extending parallel to each other in an axial direction of the shaft 31 (i.e., in the vehicle width direction), and a pair of bridging portions located respectively at two axial ends of the pair of intermediate conductor portions and connecting the pair of intermediate conductor portions. That is, each of the phase windings is ring-shaped by the pair of intermediate conductor portions and the pair of bridging portions.

In the present embodiment, the stator core 52 has a slot-less structure that has no teeth for forming slots. Specifically, the slot-less structure may be one of the following structures (A) to (C).

(A) In the stator 50, inter-conductor members are provided between the intermediate conductor portions of the phase windings in the circumferential direction. The inter-conductor members are formed of a magnetic material satisfying the following relationship: Wt × Bs ≤ Wm × Br, where Wt is the circumferential width of the inter-conductor members in each magnetic pole, Bs is the saturation flux density of the inter-conductor members, Wm is the circumferential width of the magnets in each magnetic pole, and Br is the residual flux density of the magnets constituting the magnet unit 42.
(B) In the stator 50, inter-conductor members are provided between the intermediate conductor portions of the phase windings in the circumferential direction. The inter-conductor members are formed of a nonmagnetic material.
(C) In the stator 50, no inter-conductor members are provided between the intermediate conductor portions of the phase windings in the circumferential direction.

The base part 53 is configured to connect the stator 50-side configuration of the in-wheel motor 30 to the mounting part 21 of the knuckle 20. Moreover, the base part 53 is also configured to rotatably support the shaft 31.

The base part 53 functions as a housing of the stator 50. The base part 53 has a cylindrical core mounting portion 54 extending in the vehicle width direction, and an annular portion 55 extending radially inward from an outer end portion of the core mounting portion 54 in the vehicle width direction. In a central part of the annular portion 55, there is formed a through-hole 56 through which the shaft 31 is inserted. The stator core 52 is mounted to a radially outer end of the core mounting portion 54. A cavity is formed radially inside the core mounting portion 54. In the cavity, there is arranged a bracket part 70.

The bracket part 70 has a main body portion 71 having the shape of a circular tube and extending in the axial direction of the shaft 31, and an annular bracket-side flange portion 72 extending radially outward from an outer end portion of the main body portion 71 in the vehicle width direction. The bracket part 70 is formed of a nonmagnetic material, and more particularly of a nonmagnetic metal material (e.g., aluminum). In the present embodiment, the bracket part 70 is configured as a separate member from the base part 53. In the bracket-side flange portion 72, there are formed, at predetermined intervals in the circumferential direction, a plurality of bolt insertion holes 72a which each penetrate the bracket-side flange portion 72 in the axial direction and through which bolts 92 are respectively inserted.

The in-wheel motor 30 includes a hub bearing 60 that rotatably supports the shaft 31 with respect to the annular portion 55 of the base part 53. The hub bearing 60 is implemented by a rolling bearing which includes a cylindrical outer ring 61, an inner ring 62, and a plurality of rolling elements 63 (e.g., balls) interposed between the outer ring 61 and the inner ring 62.

The outer ring 61 has an outer-ring cylinder portion 61a extending in the axial direction of the shaft 31, and an annular outer-ring-side flange portion 61b extending radially outward from an axially intermediate portion of the outer-ring cylinder portion 61a.

A radially inner end portion of the annular portion 55 is formed as an annular bearing mounting portion 55a that is recessed from the outer side toward the inner side in the vehicle width direction. In the bearing mounting portion 55a, there are formed, at predetermined intervals in the circumferential direction, a plurality of bolt insertion holes 55b which each penetrate the bearing mounting portion 55a in the axial direction and through which the bolts 92 are respectively inserted. The number of the bolt insertion holes 55b is equal to the number of the bolt insertion holes 72a. Moreover, in the outer-ring-side flange portion 61b, there are formed, at predetermined intervals in the circumferential direction, a plurality of bolt insertion holes 61c which each penetrate the outer-ring-side flange portion 61b in the axial direction and through which the bolts 92 are respectively inserted. The number of the bolt insertion holes 61c is also equal to the number of the bolt insertion holes 72a. In addition, each of the bolt insertion holes 61c of the outer-ring-side flange portion 61b is a female threaded hole in which a female thread is formed.

The bracket-side flange portion 72 abuts against an inner end face of the bearing mounting portion 55a in the vehicle width direction; and the outer-ring-side flange portion 61b abuts against an outer end face of the bearing mounting portion 55a in the vehicle width direction. In this state, each of the bolts 92 is inserted, with a head portion thereof oriented inward in the vehicle width direction, through a corresponding one of the bolt insertion holes 72a, a corresponding one of the bolt insertion holes 55b and a corresponding one of the bolt insertion holes 61c; and each of the bolts 92 has its male thread screwed into the corresponding bolt insertion hole 61c that is a female threaded hole. Consequently, both the bracket part 70 and the hub bearing 60 are fixed to the annular portion 55.

The inner ring 62 of the hub bearing 60 has an inner-ring cylinder portion 62a that is cylindrical shape and has a smaller diameter than the outer ring 61, and an inner-ring-side flange portion 62b that extends from an axial end portion of the inner-ring cylinder portion 62a in a direction intersecting (more particularly, perpendicular to) the axial direction. The shaft 31 is fixed to the inner-ring cylinder portion 62a. The inner-ring-side flange portion 62b has a plurality of protrusions 62c formed at predetermined intervals in the circumferential direction and extending outward in the vehicle width direction. Each of the protrusions 62c has a male thread formed on a distal end portion thereof. On the other hand, the flat plate part 43 of the rotor 40 has through-holes 43a formed therein. With the inner-ring-side flange portion 62b abutting against an inner end face of the flat plate part 43 in the vehicle width direction and the protrusions 62c inserted in the respective through-holes 43a, nuts 90 are screwed onto the respective male threads formed on the distal end portions of the protrusions 62c. Consequently, the flat plate part 43 is fixed to the inner ring 62. Thus, the inner ring 62, the rotor 40 and the wheel 10 rotate together with each other.

At an axially intermediate portion of the shaft 31, there is formed an annular restriction portion 34 that extends radially outward. Moreover, a male thread is formed on a distal end portion 35 of the shaft 31 on the outer side in the vehicle width direction. With the restriction portion 34 abutting against an axial end face of the inner-ring cylinder portion 62a, a nut 91 is screwed onto the male thread formed on the distal end portion 35 of the shaft 31. Consequently, the shaft 31 is fixed to the inner ring 62.

An inner end portion of the main body portion 71 of the bracket part 70 in the vehicle width direction is formed as a thin wall portion 73 having a relatively large inner diameter. Moreover, a portion of the main body portion 71, which is adjacent to and on the outer side of the thin wall portion 73 in the vehicle width direction, is formed as a thick wall portion 74 whose inner diameter is smaller than the inner diameter of the thin wall portion 73. Furthermore, a step portion 75 is formed at the boundary between the thin wall portion 73 and the thick wall portion 74. In addition, the inner diameter of the thick wall portion 74 is larger than the outer diameter of the inner-ring cylinder portion 62a.

The in-wheel motor 30 also includes a resolver 80 as a rotation angle sensor for detecting the rotation angle (or electrical angle) of the rotor 40. The resolver 80 includes a resolver rotor 81 (corresponding to a "rotor-side sensor part") mounted to an inner end portion of the shaft 31 in the vehicle width direction, and a resolver stator 82 (corresponding to a "bracket-side sensor part") arranged radially outside and facing the resolver rotor 81. The resolver rotor 81 is discoid in shape and has the shaft 31 inserted therethrough so that it is coaxial with the shaft 31. The resolver stator 82 includes an annular back yoke and coils 83 wound around a plurality of teeth extending radially inward from the back yoke. The coils 83 include an excitation coil and a pair of output coils.

The excitation coil is excited by a sinusoidal excitation signal; and magnetic flux generated in the excitation coil by the excitation signal crosses the pair of output coils. At this time, the relative positional relationship between the excitation coil and the pair of output coils changes periodically according to the rotation angle of the resolver rotor 81; thus, the amount of magnetic flux crossing the pair of output coils also changes periodically according to the rotation angle of the resolver rotor 81. Consequently, signals, which depend on the rotation angle, are outputted from the pair of output coils.

In the annular portion 55 of the base part 53, there is formed a through-hole 57 that penetrates the annular portion 55 in the axial direction. A power line 58, which electrically connects the stator coil 51 to an inverter and through which three-phase alternating current flows, is inserted through the through-hole 57. A power storage unit is electrically connected with the inverter. The power storage unit may be, for example, a storage battery such as a lithium-ion battery. The switching of upper-arm and lower-arm switches of the inverter is controlled by a control device. Consequently, the rotor 40 and thus the wheel unit rotate. In addition, in the present embodiment, the inverter, the power storage unit and the control device are provided in a part (e.g., the chassis part or a body part) of the vehicle other than the wheel unit.

Next, the mounting positions of the resolver rotor 81 and the resolver stator 82 will be described.

First, the mounting position of the resolver rotor 81 will be described. An inner end portion of the shaft 31 in the vehicle width direction is formed as a small-diameter portion 36. Moreover, a portion of the shaft 31, which is adjacent to the small-diameter portion 36 in the axial direction, is formed as a large-diameter portion 37 that has a larger radial dimension than the small-diameter portion 36. Furthermore, between the small-diameter portion 36 and the large-diameter portion 37, there is formed a step portion 38 against which an axial end face of the resolver rotor 81 abuts. The step portion 38 faces an inner circumferential surface of the thin wall portion 73 in the radial direction. That portion of the shaft 31 which is adjacent to the large-diameter portion 37 in the axial direction constitutes the restriction portion 34. A male thread is formed on a distal end portion 39 of the small-diameter portion 36.

The small-diameter portion 36 faces the inner circumferential surface of the thin wall portion 73 of the bracket part 70 in the radial direction. With the small-diameter portion 36 inserted through the resolver rotor 81 and an end portion of the resolver rotor 81 abutting against the step portion 38, a nut 93 is screwed onto the male thread formed on the distal end portion 39 of the small-diameter portion 36. Consequently, the resolver rotor 81 is sandwiched between the step portion 38 and the nut 93; thus, the resolver rotor 81 is mounted to the shaft 31.

With the step portion 38 formed in the shaft 31, it becomes possible to easily position the resolver rotor 81 in the axial direction. Moreover, it also becomes possible to improve the coaxiality of the resolver rotor 81 with respect to the central axis of rotation of the shaft 31. Consequently, it becomes possible to improve the accuracy of calculating the electrical angle.

The shaft 31 extends inward in the vehicle width direction relative to the hub bearing 60. Consequently, it becomes possible to mount the resolver rotor 81 to the inner end portion of the shaft 31 in the vehicle width direction. As a result, it becomes possible to set the outer diameter of the resolver rotor 81 to be smaller than the outer diameter of the outer-ring cylinder portion 61a; more particularly, in the present embodiment, it becomes possible to set the outer diameter of the resolver rotor 81 to be smaller than the outer diameter of the inner-ring cylinder portion 62a. In other words, it becomes possible to set the dimension from the radially outermost end of the resolver rotor 81 to the center of rotation of the resolver rotor 81 (i.e., to the center of rotation of the shaft 31) to be smaller than the radius of the outer-ring cylinder portion 61a and even smaller than the radius of the inner-ring cylinder portion 62a.

Next, the mounting position of the resolver stator 82 will be described. The resolver stator 82 is mounted to the bracket part 70 with an end of the resolver stator 82 abutting against the step portion 75 of the bracket part 70.

The resolver 80 is covered by the bracket part 70. Consequently, it becomes possible to prevent foreign matter, such as water and dust, from intruding into the space surrounded by the bracket part 70 from the outside of the bracket part 70.

In that part of the thin wall portion 73 which radially faces the resolver stator 82, there is formed a through-hole 73a through which a wiring 84 (more particularly, a harness) is inserted through; the wiring 84 is electrically connected to the coils 83. That is, the wiring 84 is led out from the inside to the outside of the bracket part 70 through the through-hole 73a. In addition, that part of the wiring 84 which is led out to the outside of the bracket part 70 extends through the space surrounded by the bracket part 70 and the base part 53 and along the direction in which the upper arm 23 extends.

A tubular seal member 85 is provided between the through-hole 73a and the wiring 84. The seal member 85 may be formed of, for example, a synthetic resin. By the seal member 85, foreign matter can be prevented from intruding into the bracket part 70 through the gap between the through-hole 73a and the wiring 84.

An opening of the main body portion 71 of the bracket part 70 formed at the inner end thereof in the vehicle width direction is covered with a cover 100. Bolt insertion holes 100a are formed in the cover 100; and female threaded holes 76 are formed in an inner end portion of the thin wall portion 73 in the vehicle width direction. With the cover 100 abutting against the thin wall portion 73, bolts 101 are inserted through the respective bolt insertion holes 100a and the respective female threaded holes 76; and male threads of the bolts 101 are screwed into the respective female threaded holes 76. Consequently, the cover 100 is fixed to the bracket part 70.

Bolt insertion holes 21a are formed in the mounting part 21 of the knuckle 20. On the other hand, female threaded holes 100b are formed in the cover 100. With the mounting part 21 abutting against the cover 100, the bolts 94 are inserted through the respective bolt insertion holes 21a and the respective female threaded holes 100b; and male threads of the bolts 94 are screwed into the respective female threaded holes 100b. Consequently, the cover 100 is fixed to the knuckle 20.

The aforementioned control device installed in the vehicle includes a resolver-to-digital converter. The resolver-to-digital converter supplies the excitation signal to the excitation coil, which is included in the coils 83, via the wiring 84. Moreover, the resolver-to-digital converter calculates the electrical angle by detection based on the signals outputted from the pair of output coils, which are included in the coils 83, and the excitation signal.

In the present embodiment, the bracket part 70 is formed of a nonmagnetic metal material, rather than a magnetic material such as iron. Consequently, it becomes possible to suppress leakage of magnetic flux from the resolver stator 82 to the bracket part 70, thereby improving the accuracy of calculating the electrical angle.

The configuration in which the opening of the bracket part 70 formed at the inner end thereof in the vehicle width direction is covered with the cover 100 has, for example, the following advantages.

The first advantage will be described. The first advantage is an advantage in the manufacturing process of the in-wheel motor 30.

In the manufacturing process, the rotor 40 and the hub bearing 60 are mounted to the base part 53 of the stator 50; and the bracket part 70 is also mounted to the base part 53. Next, the resolver stator 82 is mounted to the step portion 75 of the bracket part 70; and the resolver rotor 81 is mounted to the step portion 38 of the shaft 31.

Then, before the cover 100 is mounted to the opening of the bracket part 70, the mounted state of the resolver rotor 81 and the resolver stator 82 is checked from the opening side of the bracket part 70. More specifically, before the cover 100 is mounted to the opening of the bracket part 70, the mounted state of the resolver 80 is inspected by an inspection device provided in the manufacturing process. If the inspection reveals that the mounted state of the resolver 80 is not as desired, the mounted state of the resolver 80 can be adjusted through the opening of the bracket part 70.

The second advantage will now be described. The second advantage is an advantage when maintenance is performed for the in-wheel motor 30 after the installation of the in-wheel motor 30 in the vehicle. According to the maintenance method, the bolts 94 are first removed and then the in-wheel motor 30 is removed from the mounting part 21 of the knuckle 20. Thereafter, the bolts 101 are first removed and then the cover 100 is removed from the bracket part 70. Consequently, it becomes possible to check the mounted state of the resolver rotor 81 and the resolver stator 82 from the opening side of the bracket part 70.

As described above in detail, in the present embodiment, the shaft 31 extends from the hub bearing 60 inward in the vehicle width direction; and the distal end portion 39 of the shaft 31 extends into the inner space of the bracket part 70. Consequently, it becomes possible to configure the resolver rotor 81 and the resolver stator 82, which together constitute the resolver 80, to be not arranged radially outside the hub bearing 60. As a result, it becomes possible to set the outer diameter of the resolver rotor 81 to be smaller than the outer diameter of the outer-ring cylinder portion 61a, and more particularly becomes possible to set the outer diameter of the resolver rotor 81 to be smaller than the outer diameter of the inner-ring cylinder portion 62a. Hence, it becomes possible to reduce the outer diameter of the resolver 80.

### [Modifications of First Embodiment]

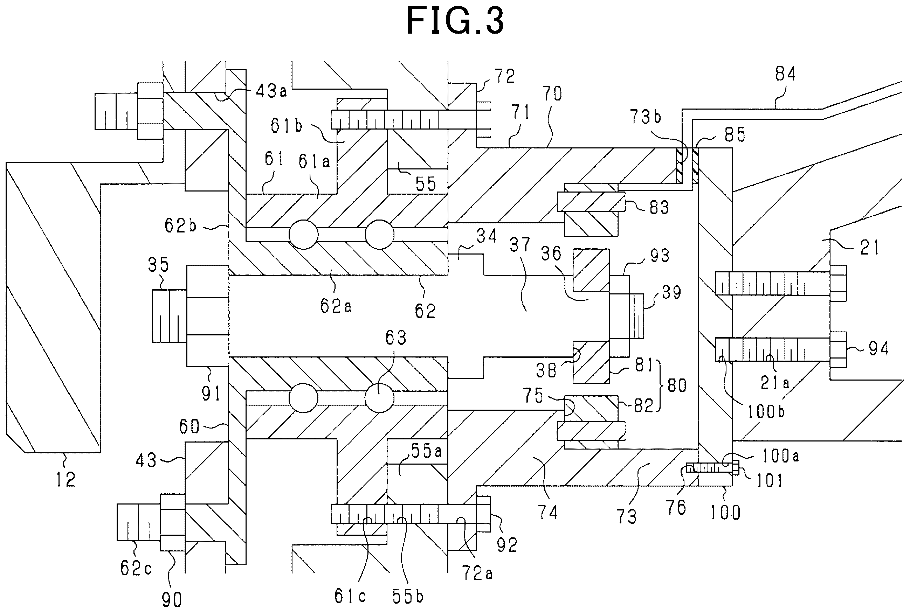

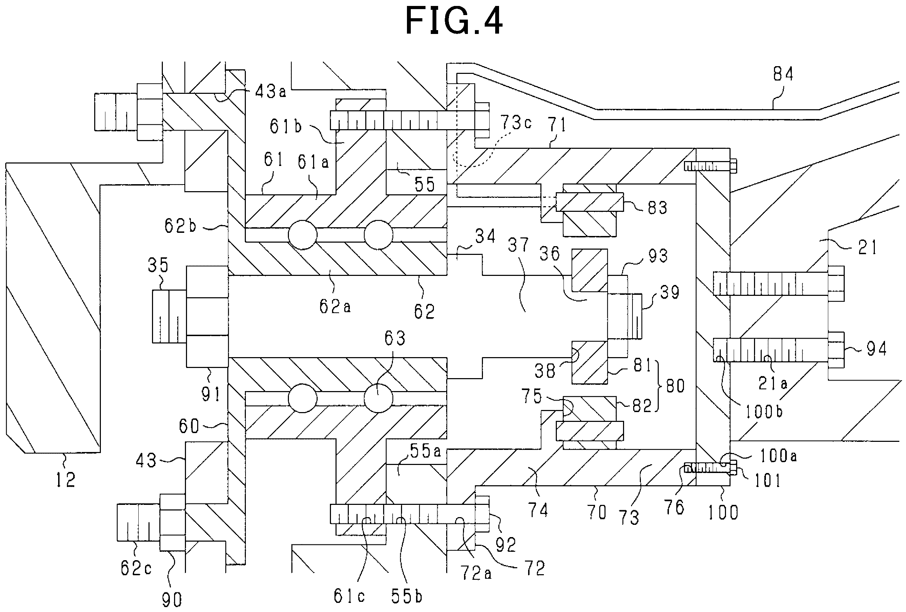

The position from which the wiring 84 is led out is not limited to the position shown in FIG. 2, but may alternatively be, for example, a position as shown in FIG. 3 or a position as shown in FIG. 4.

FIG. 3 shows a configuration in which the wiring 84 is led out from the inside to the outside of the bracket part 70 through a through-hole 73b formed between the bracket part 70 and the cover 100. It should be noted that the through-hole 73b is not limited to being formed at the inner end of the bracket part 70 in the vehicle width direction, but may alternatively be formed in the cover 100.

FIG. 4 shows a configuration in which the wiring 84 is led out from the inside to the outside of the bracket part 70 through a through-hole 73c formed between the bracket-side flange portion 72 of the bracket part 70 and the annular portion 55 of the stator 50. It should be noted that for the sake of convenience, a seal member provided between the wiring 84 and the through-hole 73c is not shown in FIG. 4.

### [Second Embodiment]

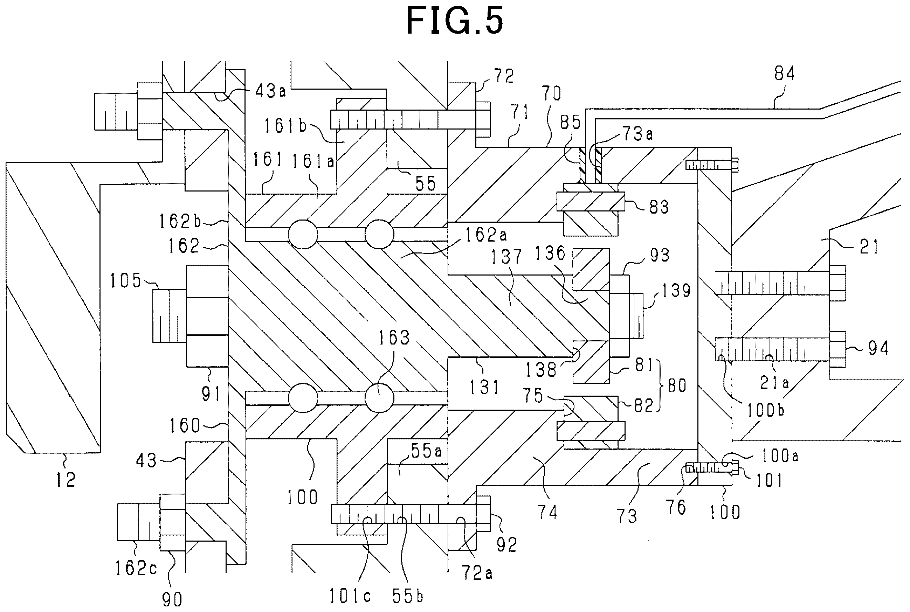

Hereinafter, a second embodiment will be described with reference to FIG. 5, focusing on the differences thereof from the first embodiment. In the present embodiment, an inner ring 162 of a hub bearing 160 and a shaft 131 are configured as a single member.

The hub bearing 160 includes an outer ring 161, the inner ring 162, and a plurality of rolling elements 163 (e.g., balls) interposed between the outer ring 161 and the inner ring 162. The outer ring 161 has an outer-ring cylinder portion 161a extending in the axial direction of the shaft 131, and an annular outer-ring-side flange portion 161b extending radially outward from an axially intermediate portion of the outer-ring cylinder portion 161a. The bracket-side flange portion 72 abuts against the inner end face of the bearing mounting portion 55a in the vehicle width direction; and the outer-ring-side flange portion 161b abuts against the outer end face of the bearing mounting portion 55a in the vehicle width direction. In this state, each of the bolts 92 is inserted, with the head portion thereof oriented inward in the vehicle width direction, through a corresponding one of the bolt insertion holes 72a, a corresponding one of the bolt insertion holes 55b and a corresponding one of the bolt insertion holes 101c formed in the outer-ring-side flange portion 161b; and each of the bolts 92 has its male thread screwed into the corresponding bolt insertion hole 101c that is a female threaded hole. Consequently, both the bracket part 70 and the hub bearing 160 are fixed to the annular portion 55.

The inner ring 162 has a cylindrical rotation support portion 162a that has a smaller diameter than the outer ring 161, and an inner-ring-side flange portion 162b that extends from an axial end portion of the rotation support portion 162a in a direction intersecting (more particularly, perpendicular to) the axial direction. The inner-ring-side flange portion 162b has a plurality of protrusions 162c formed at predetermined intervals in the circumferential direction and extending outward in the vehicle width direction. Each of the protrusions 162c has a male thread formed on a distal end portion thereof. With the inner-ring-side flange portion 162b abutting against the inner end face of the flat plate part 43 in the vehicle width direction and the protrusions 162c inserted in the respective through-holes 43a, the nuts 90 are screwed onto the respective male threads formed on the distal end portions of the protrusions 162c. Consequently, the flat plate part 43 is fixed to the inner ring 162.

The shaft 131 extends from the rotation support portion 162a inward in the vehicle width direction. In the shaft 131, there are formed a small-diameter portion 136, a large-diameter portion 137 and a step portion 138, which correspond respectively to the small-diameter portion 36, the large-diameter portion 37 and the step portion 38 in the first embodiment.

According to the present embodiment described above, it becomes possible to reduce the number of parts of the in-wheel motor 30.

### [Third Embodiment]

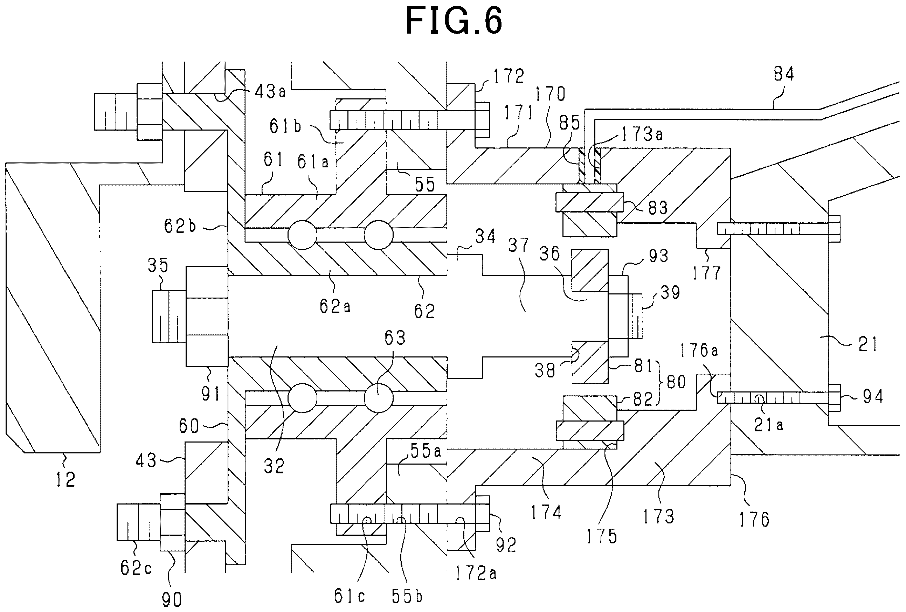

Hereinafter, a third embodiment will be described with reference to FIG. 6, focusing on the differences thereof from the first embodiment. In the present embodiment, the opening of the bracket part 70 is covered by, instead of the cover 100, the mounting part 21 of the knuckle 20.

In the present embodiment, a bracket part 170 has a main body portion 171 having the shape of a circular tube and extending in the axial direction of the shaft 31, and an annular bracket-side flange portion 172 extending radially outward from an outer end portion of the main body portion 171 in the vehicle width direction. The bracket part 170 is formed of a nonmagnetic material, and more particularly of a nonmagnetic metal material (e.g., aluminum). In the bracket-side flange portion 172, there are formed, at predetermined intervals in the circumferential direction, a plurality of bolt insertion holes 172a which each penetrate the bracket-side flange portion 172 in the axial direction and through which the bolts 92 are respectively inserted.

An inner end portion of the main body portion 171 of the bracket part 170 in the vehicle width direction is formed as a thick wall portion 173 having a relatively small inner diameter. Moreover, a portion of the main body portion 171, which is adjacent to and on the outer side of the thick wall portion 173 in the vehicle width direction, is formed as a thin wall portion 174 whose inner diameter is larger than the inner diameter of the thick wall portion 173. Furthermore, a step portion 175 is formed at the boundary between the thick wall portion 173 and the thin wall portion 174. The resolver stator 82 is mounted to the bracket part 170 with an end of the resolver stator 82 abutting against the step portion 175 of the bracket part 170. The inner diameter of the thick wall portion 173 is larger than the outer diameter of the inner-ring cylinder portion 62a. **In** addition, in the thin wall portion 174 of the bracket part 170, there is formed a through-hole 173a through which the wiring 84 is inserted.

At an inner end of the thick wall portion 173 in the vehicle width direction, there is formed an extension portion 176 that extends radially inward. Moreover, a through-hole 177 is formed in a central part of the extension portion 176. Furthermore, female threaded holes 176a are formed, around the through-hole 177, in the extension portion 176 so as to allow the male threads of the bolts 94 to be respectively screwed into the female threaded holes 176a.

With the mounting part 21 of the knuckle 20 abutting against the extension portion 176 of the bracket part 170, the bolts 94 are inserted through the respective bolt insertion holes 21a and the respective female threaded holes 176a; and the male threads of the bolts 94 are screwed into the respective female threaded holes 176a. Consequently, the bracket part 170 is fixed to the knuckle 20.

According to the present embodiment described above, it becomes possible to reduce the number of parts of the in-wheel motor 30.

### [Fourth Embodiment]

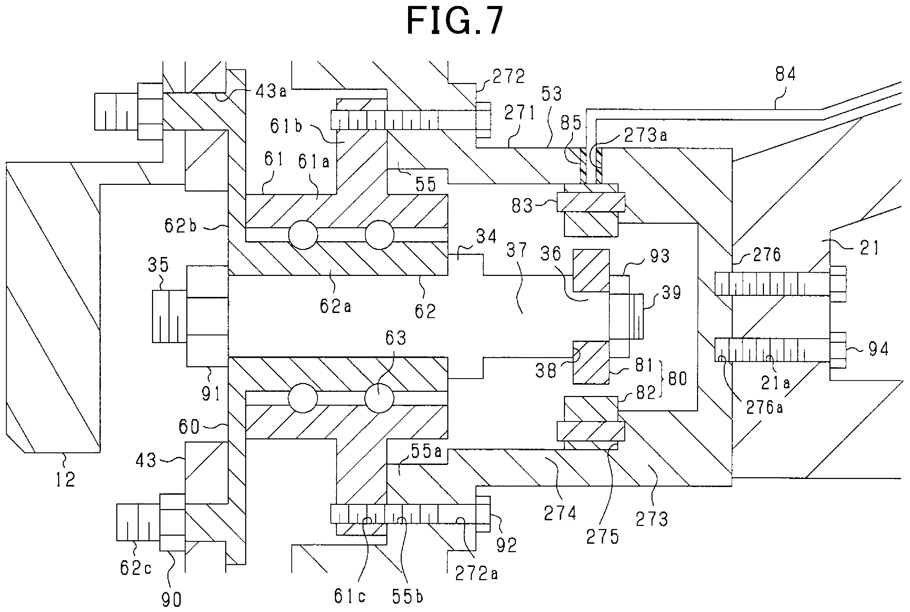

Hereinafter, a fourth embodiment will be described with reference to FIG. 7, focusing on the differences thereof from the third embodiment. In the present embodiment, the bracket part and the base part 53 of the stator are configured as a single part.

In the present embodiment, the bracket part has a main body portion 271, a bracket-side flange portion 272, bolt insertion holes 272a, a thick wall portion 273, a thin wall portion 274, a step portion 275, an extension portion 276 and female threaded holes 276a, which correspond respectively to the main body portion 171, the bracket-side flange portion 172, the bolt insertion holes 172a, the thick wall portion 173, the thin wall portion 174, the step portion 175, the extension portion 176 and the female threaded holes 176a in the third embodiment. In addition, in the present embodiment, the bracket-side flange portion 272 of the bracket part and the annular portion 55 of the base part 53 of the stator are seamlessly connected with each other.

In the present embodiment described above, the resolver stator 82 is mounted to the base part 53 of the stator 50. Consequently, it becomes possible to reduce the number of parts of the in-wheel motor 30.

### [Fifth Embodiment]

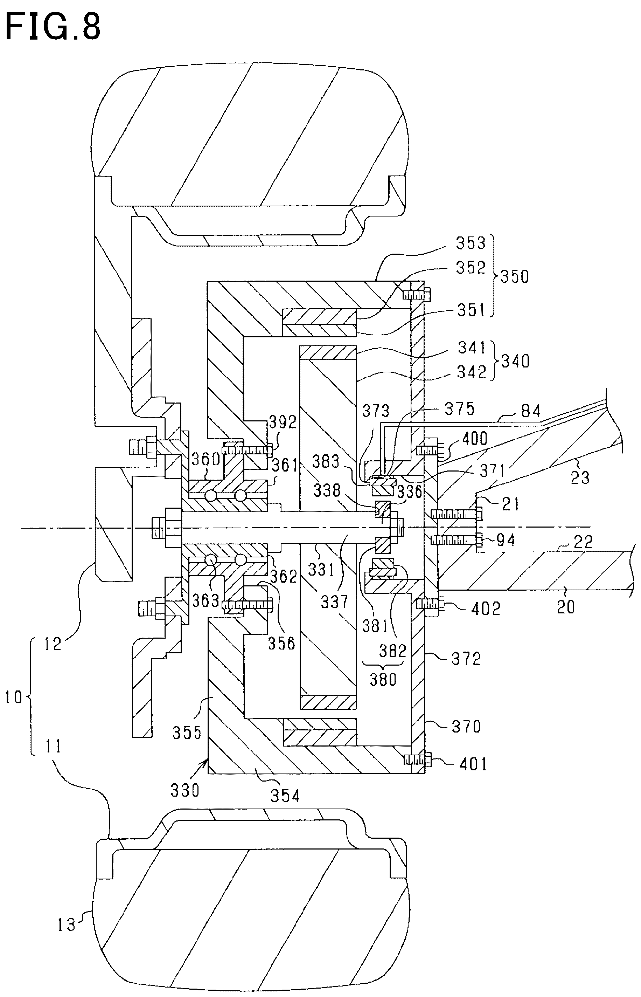

Hereinafter, a fifth embodiment will be described with reference to FIG. 8, focusing on the differences thereof from the first embodiment. In the present embodiment, in the vehicle, there is employed an inner rotor type in-wheel motor 330, instead of the outer rotor type in-wheel motor as described in the first embodiment. It should be noted that in the present embodiment, the explanation of components similar to those in the first embodiment will be omitted as appropriate.

The in-wheel motor 330 includes a shaft 331 extending in the vehicle width direction, a rotor 340, and a stator 350 arranged radially outside the rotor 340.

The rotor 340 includes a cylindrical magnet unit 341, and a rotor core 342 provided radially inside the magnet unit 341. In addition, the in-wheel motor 330 may be configured as an interior permanent magnet synchronous machine.

The stator 350 includes a cylindrical stator coil 351 arranged at a position radially facing the magnet unit 341, a cylindrical stator core 352 provided radially outside the stator coil 351, and a base part 353. The base part 353 functions as a housing of the stator 350. The base part 353 includes a cylindrical core mounting portion 354 extending in the vehicle width direction, and an annular portion 355 extending radially inward from an outer end portion of the core mounting portion 354 in the vehicle width direction. In a central part of the annular portion 355, there is formed a through-hole 356 through which the shaft 331 is inserted. The stator core 352 is mounted to a radially inner end of the core mounting portion 354.

The in-wheel motor 330 includes a hub bearing 360 that rotatably supports the shaft 331 with respect to the annular portion 355 of the base part 353. The hub bearing 360 is implemented by a rolling bearing which includes a cylindrical outer ring 361, an inner ring 362, and a plurality of rolling elements 363 (e.g., balls) interposed between the outer ring 361 and the inner ring 362. An outer-ring-side flange portion of the outer ring 361 is fixed to the disc part 12. The shaft 331 is fixed to the inner ring 362.

The in-wheel motor 330 also includes a bracket part 370. The bracket part 370 has a main body portion 371 having the shape of a circular tube and extending in the axial direction of the shaft 331, and an annular bracket-side flange portion 372 extending radially outward from an inner end portion of the main body portion 371 in the vehicle width direction. The bracket-side flange portion 372 is fixed to the core mounting portion 354 of the base part 353 of the stator 350 by bolts 401.

An opening of the bracket-side flange portion 372 formed at the inner end thereof in the vehicle width direction is covered by a cover 400. The cover 400 is fixed to the bracket-side flange portion 372 by bolts 402. Moreover, the cover 400 is also fixed to the mounting part 21 of the knuckle 20 by bolts 94.

At an outer end of the main body portion 371 in the vehicle width direction, there is formed an extension portion 373 that extends radially inward. A step portion 375 is formed at the boundary between the main body portion 371 and the extension portion 373. A resolver stator 382 of a resolver 380 is mounted to the bracket part 370, with an end of the resolver stator 382 abutting against the step portion 375. Coils 383 are wound around the resolver stator 382.

A resolver rotor 381 of the resolver 380 is mounted to an inner end portion of the shaft 331 in the vehicle width direction. In the shaft 331, there are formed a small-diameter portion 336, a large-diameter portion 337 and a step portion 338, which correspond respectively to the small-diameter portion 36, the large-diameter portion 37 and the step portion 38 in the first embodiment. The resolver rotor 381 is mounted to the shaft 331, with the small-diameter portion 336 inserted through the resolver rotor 381 and an end portion of the resolver rotor 381 abutting against the step portion 338.

According to the present embodiment described above, it becomes possible to provide the in-wheel motor 330 enabling reduction in the outer diameter of the resolver 380.

### [Other Embodiments]

The above-described embodiments may be modified and implemented as follows.

The shape of the bracket part is not limited to a circular tube, but may alternatively be a tube having a quadrangular shape (e.g., a square or rectangular shape). Moreover, the bracket part may be formed of a magnetic material (e.g., iron).

The outer diameter of the resolver stator may be set to be larger than the outer diameter of the outer ring of the hub bearing, provided that the outer diameter of the resolver rotor is smaller than the outer diameter of the inner ring of the hub bearing.

In the first to fourth embodiments, instead of the configuration in which the flat plate part 43 of the in-wheel motor 30 is fixed to the disc part 12 of the wheel 10, a configuration may be employed in which the magnet holder 41 of the in-wheel motor 30 is fixed to the rim part 11.

In the first to fourth embodiments, the rim part 11 of the wheel 10 may serve as the magnet holder of the in-wheel motor 30; and the disc part 12 may serve as the flat plate part. In other words, the rotor 40 of the in-wheel motor 30 may serve as the wheel.

In the configuration shown in FIG. 1, a bearing may be mounted to the inner circumferential surface of the bracket part 70 to rotatably support an inner end portion of the shaft 31 in the vehicle width direction. In this case, the bearing may be provided, for example, closer than the resolver 80 to the cover 100 in the axial direction.

The inverter may alternatively be built in the in-wheel motor.

The rotating electric machine is not limited to the radial gap type rotating electric machines as described in the first to fifth embodiments, but may be an axial gap type rotating electric machine. In this case, a discoid rotor-side sensor part may be mounted to a distal end portion of a shaft; and a bracket-side sensor part may be mounted to a bracket part at a position axially facing the distal end portion of the shaft. Moreover, in this case, the rotation angle sensor may alternatively be, for example, a magnetic encoder that has a magnet unit, which includes permanent magnets, serving as the rotor-side sensor part and a magnetic sensor, which includes Hall elements, serving as the bracket-side sensor part.

The rotating electric machine is not limited to permanent magnet synchronous machines, but may alternatively be a wound-field synchronous machine having a field coil provided in a rotor or a stator. Moreover, the rotating electric machine is not limited to the synchronous machines, but may alternatively be, for example, an induction machine.

The wheeled mobile object in which the in-wheel motor is installed may be an unmanned guided vehicle or a forklift. Further, the unmanned guided vehicle may be, for example, an Automatic Guided Vehicle (AGV) or an Autonomous Mobile Robot (AMR) which are used in factories.

Furthermore, the wheeled mobile object in which the in-wheel motor is installed may be a small-sized electric vehicle for riding, such as an electric wheelchair or a mobility scooter. A small-sized electric vehicle is an electric vehicle which travels at a speed of, for example, 10 km/h or lower.

Hereinafter, characteristic configurations extracted from the above-described embodiments will be described.

### [First Configuration]

An in-wheel motor (30, 330) applicable to a mobile object,
the mobile object comprising a wheel (10) having a rim part (11) to which a tire (13) can be mounted and a disc part (12) provided on a side of the rim part,
the in-wheel motor having at least part thereof received in an inner space of the wheel and being configured to rotate the wheel, the inner space being surrounded by the disc part and the rim part,
the in-wheel motor comprising:
   a tubular bracket part (70, 170, 370) fixed to a chassis part (20) of the mobile object and extending outward in a vehicle width direction from the chassis part side;
   a stator (50, 350) connected to the bracket part;
   a rotor (40, 340) having a field pole and a shaft (31, 131, 331) and connected to the wheel, the shaft extending in the vehicle width direction;
   a bearing (60, 160, 360) provided, in an axial direction of the shaft, on an outer side of the bracket part in the vehicle width direction to rotatably support the shaft; and
   a rotation angle sensor (80, 380),
   wherein
   the shaft extends axially inward in the vehicle width direction to a position facing an inner circumferential surface of the bracket part in a radial direction of the shaft,
   the rotation angle sensor has:
      a rotor-side sensor part (81, 381) mounted to the shaft at the position facing the inner circumferential surface of the bracket part in the radial direction and extending outward in the radial direction; and
      a bracket-side sensor part (82, 382) mounted to the bracket part at a position facing the rotor-side sensor part and configured to output a signal that depends on rotation angle of the rotor-side sensor part, and
      a dimension from a radially outermost end of the rotor-side sensor part to a center of rotation of the rotor-side sensor part is smaller than a radius of the bearing.

### [Second Configuration]

The in-wheel motor according to the first configuration, wherein
the rotor-side sensor part has an annular shape, and
the bracket-side sensor part also has an annular shape, and is mounted to the inner circumferential surface of the bracket part at a position facing the rotor-side sensor part in the radial direction of the shaft.

### [Third Configuration]

The in-wheel motor according to the second configuration, wherein
the in-wheel motor (30) is an outer rotor type motor,
the stator (50) has:
   a base part (53) connected to an outer end portion of the bracket part in the vehicle width direction;
   a stator core (52) provided radially outside the base part; and
   a stator coil (51) provided radially outside the stator core, and
   the bearing (60, 160) is mounted to the base part.

### [Fourth Configuration]

The in-wheel motor according to the third configuration, wherein
the bearing (60) is a rolling bearing which has:
an outer ring (61) mounted to the base part;
an inner ring (62) to which the shaft is mounted; and
rolling elements (63) provided between the outer ring and the inner ring,
the rotor (40) has:
   a cylindrical magnet holder (41) received in the inner space of the wheel; and
   a connection part (43) provided at an outer end of the magnet holder in the vehicle width direction, received in the inner space of the wheel and connecting an outer end portion of the shaft in the vehicle width direction and the outer end of the magnet holder in the vehicle width direction,
   the field pole includes a magnet unit (42) that is provided on an inner circumferential surface of the magnet holder to form a plurality of magnetic poles whose polarities are alternately different in a circumferential direction, and
   an outer diameter of the rotor-side sensor part (81) is smaller than an outer diameter of the outer ring.

### [Fifth Configuration]

The in-wheel motor according to the third configuration, wherein
the bearing (160) is a rolling bearing which has:
an outer ring (161) mounted to the base part;
an inner ring (162); and
rolling elements (163) provided between the outer ring and the inner ring,
the inner ring has:
   a rotation support portion (162a) arranged radially inside the outer ring and having a cylindrical outer surface;
   the shaft (131) extending axially inward in the vehicle width direction from the rotation support portion; and
   a flange portion (162b) extending radially from an axially outer end portion of the rotation support portion in the vehicle width direction,
   the rotor (40) has:
      a cylindrical magnet holder (41) received in the inner space of the wheel; and
      a connection part (43) provided at an outer end of the magnet holder in the vehicle width direction, received in the inner space of the wheel and connecting the flange portion and the outer end of the magnet holder in the vehicle width direction,
      the field pole includes a magnet unit (42) that is provided on an inner circumferential surface of the magnet holder to form a plurality of magnetic poles whose polarities are alternately different in a circumferential direction, and
      an outer diameter of the rotor-side sensor part (81) is smaller than an outer diameter of the outer ring.

### [Sixth Configuration]

The in-wheel motor according to any one of the second to fifth configurations, wherein
the rotation angle sensor is a resolver which includes:
a resolver rotor as the rotor-side sensor part; and
an excitation coil and a resolver stator (82, 382), around which the excitation coil is wound, as the bracket-side sensor part.

### [Seventh Configuration]

The in-wheel motor according to the sixth configuration, wherein
the bracket part is formed of a nonmagnetic material.

### [Eighth Configuration]

The in-wheel motor according to any one of the second to seventh configurations, wherein
an inner end portion of the shaft in the vehicle width direction, which faces the inner circumferential surface of the bracket part in the radial direction, is formed as a small-diameter portion (36, 136, 336),
a portion of the shaft, which also faces the inner circumferential surface of the bracket part in the radial direction and is adjacent to the small-diameter portion in the axial direction, is formed as a large-diameter portion (37, 137, 337) that has a larger outer diameter than the small-diameter portion, and
the rotor-side sensor part is mounted to the shaft, with an outer end portion of the rotor-side sensor part in the vehicle width direction abutting against a step portion (38, 138, 338) of the shaft formed between the small-diameter portion and the large-diameter portion.

### [Ninth Configuration]

The in-wheel motor according to any one of the second to eighth configurations, wherein
a wiring (84) for transmitting the signal outputted from the bracket-side sensor part is led out from the bracket-side sensor part, and
the wiring is further led out from an inside to an outside of the bracket part through a through-hole (73a) that penetrates the bracket part in the radial direction, or through a through-hole (73c) formed between the bracket part and the stator.

### [Tenth Configuration]

The in-wheel motor according to any one of the second to eighth configurations, wherein
the bracket part has a cover (100, 400) that covers an opening of the bracket part on an inner side in the vehicle width direction, and
the cover is fixed to the chassis part.

### [Eleventh Configuration]

The in-wheel motor according to the tenth configuration, wherein
a wiring (84) for transmitting the signal outputted from the bracket-side sensor part is led out from the bracket-side sensor part, and
the wiring is further led out from an inside to an outside of the bracket part through a through-hole (73b) formed between the bracket part and the cover.

### [Twelfth Configuration]

The in-wheel motor according to the ninth or eleventh configuration, further comprising a seal member (85) that closes the through-hole except for the wiring.

While the present disclosure has been described pursuant to the above embodiments, it should be appreciated that the present disclosure is not limited to the embodiments and the structures. Instead, the present disclosure encompasses various modifications and changes within equivalent ranges. In addition, various combinations and modes are also included in the category and the scope of technical idea of the present disclosure.

## Claims

1. An in-wheel motor (30, 330) applicable to a mobile object,
the mobile object comprising a wheel (10) having a rim part (11) to which a tire (13) can be mounted and a disc part (12) provided on a side of the rim part,
the in-wheel motor having at least part thereof received in an inner space of the wheel and being configured to rotate the wheel, the inner space being surrounded by the disc part and the rim part,
the in-wheel motor comprising:
a tubular bracket part (70, 170, 370) fixed to a chassis part (20) of the mobile object and extending outward in a vehicle width direction from the chassis part side;
a stator (50, 350) connected to the bracket part;
a rotor (40, 340) having a field pole and a shaft (31, 131, 331) and connected to the wheel, the shaft extending in the vehicle width direction;
a bearing (60, 160, 360) provided, in an axial direction of the shaft, on an outer side of the bracket part in the vehicle width direction to rotatably support the shaft; and
a rotation angle sensor (80, 380),
wherein
the shaft extends axially inward in the vehicle width direction to a position facing an inner circumferential surface of the bracket part in a radial direction of the shaft,
the rotation angle sensor has:
a rotor-side sensor part (81, 381) mounted to the shaft at the position facing the inner circumferential surface of the bracket part in the radial direction and extending outward in the radial direction; and
a bracket-side sensor part (82, 382) mounted to the bracket part at a position facing the rotor-side sensor part and configured to output a signal that depends on rotation angle of the rotor-side sensor part, and
a dimension from a radially outermost end of the rotor-side sensor part to a center of rotation of the rotor-side sensor part is smaller than a radius of the bearing.

2. The in-wheel motor as set forth in Claim 1, wherein
the rotor-side sensor part has an annular shape, and
the bracket-side sensor part also has an annular shape, and is mounted to the inner circumferential surface of the bracket part at a position facing the rotor-side sensor part in the radial direction of the shaft.

3. The in-wheel motor as set forth in Claim 2, wherein
the in-wheel motor (30) is an outer rotor type motor,
the stator (50) has:
a base part (53) connected to an outer end portion of the bracket part in the vehicle width direction;
a stator core (52) provided radially outside the base part; and
a stator coil (51) provided radially outside the stator core, and
the bearing (60, 160) is mounted to the base part.

4. The in-wheel motor as set forth in Claim 3, wherein
the bearing (60) is a rolling bearing which has:
an outer ring (61) mounted to the base part;
an inner ring (62) to which the shaft is mounted; and
rolling elements (63) provided between the outer ring and the inner ring,
the rotor (40) has:
a cylindrical magnet holder (41) received in the inner space of the wheel; and
a connection part (43) provided at an outer end of the magnet holder in the vehicle width direction, received in the inner space of the wheel and connecting an outer end portion of the shaft in the vehicle width direction and the outer end of the magnet holder in the vehicle width direction,
the field pole includes a magnet unit (42) that is provided on an inner circumferential surface of the magnet holder to form a plurality of magnetic poles whose polarities are alternately different in a circumferential direction, and
an outer diameter of the rotor-side sensor part (81) is smaller than an outer diameter of the outer ring.

5. The in-wheel motor as set forth in Claim 3, wherein
the bearing (160) is a rolling bearing which has:
an outer ring (161) mounted to the base part;
an inner ring (162); and
rolling elements (163) provided between the outer ring and the inner ring,
the inner ring has:
a rotation support portion (162a) arranged radially inside the outer ring and having a cylindrical outer surface;
the shaft (131) extending axially inward in the vehicle width direction from the rotation support portion; and
a flange portion (162b) extending radially from an axially outer end portion of the rotation support portion in the vehicle width direction,
the rotor (40) has:
a cylindrical magnet holder (41) received in the inner space of the wheel; and
a connection part (43) provided at an outer end of the magnet holder in the vehicle width direction, received in the inner space of the wheel and connecting the flange portion and the outer end of the magnet holder in the vehicle width direction,
the field pole includes a magnet unit (42) that is provided on an inner circumferential surface of the magnet holder to form a plurality of magnetic poles whose polarities are alternately different in a circumferential direction, and
an outer diameter of the rotor-side sensor part (81) is smaller than an outer diameter of the outer ring.

6. The in-wheel motor as set forth in any one of Claims 2 to 5, wherein
the rotation angle sensor is a resolver which includes:
a resolver rotor as the rotor-side sensor part; and
an excitation coil and a resolver stator (82, 382), around which the excitation coil is wound, as the bracket-side sensor part.

7. The in-wheel motor as set forth in Claim 6, wherein
the bracket part is formed of a nonmagnetic material.

8. The in-wheel motor as set forth in any one of Claims 2 to 5, wherein
an inner end portion of the shaft in the vehicle width direction, which faces the inner circumferential surface of the bracket part in the radial direction, is formed as a small-diameter portion (36, 136, 336),
a portion of the shaft, which also faces the inner circumferential surface of the bracket part in the radial direction and is adjacent to the small-diameter portion in the axial direction, is formed as a large-diameter portion (37, 137, 337) that has a larger outer diameter than the small-diameter portion, and
the rotor-side sensor part is mounted to the shaft, with an outer end portion of the rotor-side sensor part in the vehicle width direction abutting against a step portion (38, 138, 338) of the shaft formed between the small-diameter portion and the large-diameter portion.

9. The in-wheel motor as set forth in any one of Claims 2 to 5, wherein
a wiring (84) for transmitting the signal outputted from the bracket-side sensor part is led out from the bracket-side sensor part, and
the wiring is further led out from an inside to an outside of the bracket part through a through-hole (73a) that penetrates the bracket part in the radial direction, or through a through-hole (73c) formed between the bracket part and the stator.

10. The in-wheel motor as set forth in Claim 9, further comprising a seal member (85) that closes the through-hole except for the wiring.

11. The in-wheel motor as set forth in any one of Claims 2 to 5, wherein
the bracket part has a cover (100, 400) that covers an opening of the bracket part on an inner side in the vehicle width direction, and
the cover is fixed to the chassis part.

12. The in-wheel motor as set forth in Claim 11, wherein
a wiring (84) for transmitting the signal outputted from the bracket-side sensor part is led out from the bracket-side sensor part, and
the wiring is further led out from an inside to an outside of the bracket part through a through-hole (73b) formed between the bracket part and the cover.

13. The in-wheel motor as set forth in Claim 12, further comprising a seal member (85) that closes the through-hole except for the wiring.
